# EUROPEAN PATENT SPECIFICATION

(11) **EP 0 585 998 B1**
(45) Date of publication and mention of the grant of the patent: **04.11.1998**
(21) Application number: 93202329.4
(22) Date of filing: 07.08.1993
(51) Int. Cl.: C04B 40/02, C04B 28/02

(54) **Macro defect free cement composition with improved properties, and a process for its preparation**
Macrofehlerfreie Zementzusammensetzungen mit verbesserten Eigenschaften und Verfahren zu seiner Herstellung
Compositions de ciment exemptes de macrodéfauts à propriétés améliorées et procédure pour sa préparation

(30) Priority: 10.08.1992 IT MI921970
(43) Date of publication of application: 09.03.1994
(73) Proprietor: ITALCEMENTI S.p.A., 24100 Bergamo (IT)
(72) Inventor: Corazza, Fabio, I-86039 Termoli (Campobasso) (IT); Castaldi, Graziano, I-28072 Briona (Novara) (IT); Cassar, Luigi, I-20097 San Donato Milanese (Milano) (IT)
(74) Representative: Fusina, Gerolamo

(56) References cited:
- EP-A- 0 055 035
- EP-A- 0 142 714
- DE-A- 2 203 493
- GB-A- 2 168 694
- CHEMICAL ABSTRACTS, vol. 109, no. 6, 8 August 1988, Columbus, Ohio, US; abstract no. 42675y, & JP-A-63 055 174 (SEKISUI CHEMICAL CO. LTD) 9 March 1988

## Description

This invention relates to a polymer-containing cementitious material having high flexural strength and improved resistance to water and environmental conditions, and a process for its preparation.

So-called MDF (macrodefect-free) cement is a type of cement well known in the art.

In this respect, US patents 4,070,199 and 4,240,860 describe a hydraulic cementitious material having high flexural strength prepared by mixing hydraulic cement, water and a water-soluble (or water-dispersible) polymer using a roller mixer.

The product is then pressed and left to harden.

Subsequent patents (US 4,410,366 and US 4,333,748) describe other polymer materials which can be used in the cementitious mix such as hydroxypropyl methyl cellulose or partly hydrolyzed polyvinyl acetate.

One of the main defects of the hardened MDF cementitious product is its water resistance. In this respect, MDF cement suffers from gradually worsening mechanical characteristics because as it contains a water-soluble polymer it tends to absorb water even after hardening.

In addition the water absorbed by the polymer tends to extract the C₂AlH₈ (calcium aluminium hydrate) present in the cement.

The problems relative to the water resistance of MDF cement have been the subject of numerous studies. Of particular interest is the study published in Ceramic Transactions 1991, vol. 16, pp 501-19.

According to this article the flexural strength passes from about 250 MPa to about 100 MPa when an MDF cement test piece is kept in water for 28 days. The problem is particularly serious because MDF cement samples which have been kept in contact with water only partly re-acquire their initial strength after drying.

The following solutions have been proposed to this problem:
- increasing the temperature during pressing and drying; in this case a worsening is in fact achieved because the polymer generally degrades;
- adding cross linking agents to make the polymer insoluble (boric acid, organochromium III complexes); in this case non-repeatable data are obtained and in the case of chromium toxicological and environmental problems are introduced which make the material practically unusable;
- surface treatment with products which make the test pieces water-repellent (such as organosilanes); such treatment is of limited life and in practice leads to a worsening in the test piece quality.

A particularly interesting solution, described in European patent No. 280971, comprises treating the MDF material with isocyanate so that this reacts with the water-soluble polymer to form a urethane, amide or similar bond.

The described treatment cannot however ensure against release of the isocyanate and has serious toxicity problems. In addition the isocyanate polymerization process is costly in that the reaction takes place at 100°C over a period of about 20 hours in the presence of a catalyst.

Furthermore, Chemical Abstract 109:42675y (Japanese Kokai Tokkyo Koho JP 63 55, 174) discloses a method of thermal drying of a cement-based, green molded product, and curing it in an atmosphere containing steam and CO₂. The thermal drying reduces the water content of the molded product, thereby allowing CO₂ and steam penetration to accelerate the hardening. Thus a mixture comprising ordinary Portland cement 100, sand 50, Vinylon fiber 2.5, Me cellulose 1.5 and water 35 parts, was press-molded at 65 kg/cm², dried at 200°C for 10 minutes and then cured in an atmosphere containing 40 % by viol. of CO₂ and steam for 30 minutes to give a product with bending strength 65 kg/cm², vs. 26 kg/cm² when cured for 1 hour by steaming without carbonation. Such method, however, does not concern a cement MDF.

It has been surprisingly found possible to solve the problem of water resistance of MDF cementitious material by a method which is easily implemented, is economical and of reliable effectiveness, this being to treat the material with carbonating agents in the presence of water.

The material treated in this manner undergoes a chemical and physical change by which its mechanical flexural strength characteristics are maintained even after immersion in water.

One aspect of the present invention is therefore a process for increasing the water resistance of hardened cementitious MDF materials, having a water content not more than 30% by weight with respect on the hydraulic cement quantity, comprising a water-soluble or water-dispersible polymer, characterised by treating said cementitious material with carbonating agents in the presence of water.

A further aspect of the present invention is a cementitious material comprising a water-soluble (or water-dispersible) polymer obtained by the aforesaid treatment.

Any type of hydraulic cement can be used in cementitious materials of the invention. The term "hydraulic cement" means any material which sets and hardens by the addition of water. The hydraulic cement can be a silicate-based (siliceous) cement such as Portland cement. Alternatively it can be an aluminate-based (aluminous) cement such as a calcium aluminate cement, or a mixed cement such as a pozzolan cement, or a cement containing slag or fly ash.

Mixtures of two or more different hydraulic cements can be used if desired. In a preferred aspect of the invention aluminous cements are used, and in particular Secar^{R} 50 and 77 aluminous cement and Ciment Fondu^{R} (Lafarge).

All the aggregates, fly-ash and additives for preparing mixes known in the art can be used in the cementitious material of the invention.

In practice all common and special commercially available hydraulic cements can be used in the cementitious compositions of the invention as such.

The cementitious composition of the invention must necessarily comprise an organic polymer which is either water-soluble or water-dispersible.

The polymer is used to give the cementitious mix the necessary formability characteristic of this type of cement and to improve its mechanical characteristics.

With regard to the treatment of the present invention there is no limit to the type of water-soluble or water-dispersible polymer which can be used.

Examples of water-soluble or water-dispersible polymers which can be suitably used are:
- alkyl ethers and hydroxyalkyl cellulose (methylcellulose, hydroxyethylcellulose, methylhydroxyethylcellulose, ethylhydroxyethylcellulose, propylcellulose, hydroxypropylmethylcellulose, hydroxybutylmethylcellulose)
- acrylamide or polyacrylamide polymers (polyacrylamide, polymethacrylamide, acrylamide/methacrylamide copolymer) or hydrolyzable polymers or copolymers of vinylacetate, in particular polyvinylacetate;
- polyvinylalcohol and its polymers or copolymers
- polyalkylene oxide derivatives (polyalkylene glycols of molecular weight exceeding 10,000), or
- polyalkoxy derivatives of alcohols or phenols.

All the water-soluble or water-dispersible polymers reported in the said European patent No. 280971 can be used in the present invention.

The polymer particularly preferred is polyvinyl alcohol, in particular of fine particle size such as Gohsenol^{R} KH 17s.

The MDF cementitious material can also comprise fibres. Suitable examples of such fibres are polyethylene, polypropylene, polyamide, polyester, polyvinyl alcohol, cellulose, polyacrylonitrile, carbon, kevlar, nylon and the like, their copolymers or their mixtures. They can be fibrillated or can be in the form of continuous or cut threads or meshes with various mesh apertures, either random or orientated.

Examples of MDF cements which can be treated by the process of the invention are those described in the following European patents: 332 388, 21 682, 158 471, 114 518, 115 137, 55 035, 38 126, 30 408 and 21 681.

The polymer content of the cement mix can vary from 0.1 to 20% by weight of the hydraulic cement quantity, and preferably from 0.3 to 10% by weight.

Although the water quantity can differ depending on the type of polymer, it is preferably not more than 30% by weight of the hydraulic cement quantity. Larger water quantities can rapidly depress the mechanical characteristics of the final material.

The flexural strength of these cementitious materials is of the order of 20-300 MPa.

As is well known in the art, a cementitious composition based on hydraulic cement, water and polymer must be homogenized.

Homogenization can be achieved using high shear mixing methods, preferably calandering or extrusion.

If the composition is calandered it is then generally pressed, preferably at a temperature of 50-80°C. After this treatment the MDF cementitious composition is left to harden.

The treatment with carbonating agents in the presence of water can be conducted either on the hardened cementitious material or on the unhardened material.

The term "carbonating agent" as used in the text and claims means any substance able to carbonate the cementitious material. Hence carbon dioxide or any water-soluble bicarbonate or carbonate can be suitably used.

The most preferred carbonating agent is carbon dioxide in the presence of water.

Carbonates and bicarbonates of alkaline metals and ammonium or alkylammonium salts are also particularly preferred.

The carbonation can be suitably conducted using water in the vapour phase and CO₂ in the gaseous state.

In a preferred aspect of the invention the unhardened material is treated with a gaseous mixture of carbon dioxide and steam.

The treatment time varies according to the form and size of the material to be treated, the type of carbonating agent and the pH, and can be easily deduced from practical experience. It has been observed that treatment in water saturated with CO₂ for three days is already sufficient to give good results in terms of final article strength.

Temperature is not an essential parameter for the quality of the treatment, which can hence also be conducted at ambient temperature.

MDF cementitious material treated by the process of the present invention has shown unexpected flexural strength.

In this respect it is well known that when a cementitious material of MDF type is immersed in water, the solution pH rapidly attains alkaline values (pH 11) and the flexural strength dramatically decreases.

It has been found experimentally that a test piece (about 18 g) prepared as known in the art loses about 1.5 g of solid after treatment for 25 days in water in an atmospheric environment.

This solid (calcium hydroxide, calcium carbonate and aluminium hydroxide) deriving from hydrolysis of the cementitious material followed by partial carbonation of the species present in solution is probably the main cause of the loss of strength.

In contrast, if an MDF cement test piece of the aforegoing characteristics is treated in water into which carbon dioxide has previously been bubbled to saturation, it has been found that after 25 days the pH is still neutral and no precipitate forms.

When the treated test piece was then immersed in water for a further three days the pH remained virtually unchanged (pH 8.4).

The mechanical characteristics of the test piece treated by the process of the invention were tested as known in the art, and it was found that the flexural strength of a treated test piece was significantly greater than that measured for a comparison test piece immersed in water. The treatment is even more surprising in that on increasing the carbon dioxide percentage in the water a more rapid carbonation of the hydrolysis products would be expected, with subsequent decomposition of the article.

Some examples are given below to illustrate the invention but must not be considered as limitative thereof.

### EXAMPLE 1

An MDF cement test piece was prepared as follows:
100 g of Secar 71 aluminous cement, 7 g of hydrolyzed polyvinyl alcohol (80%, Gohsenol KH 17 S) and 12 g of a water/glycerol solution with a glycerol content equivalent to 10 wt% of the polyvinylalcohol were premixed by hand in a beaker. The composition was then passed through a calander with its rollers about 1 mm apart.

A quantity of material was rolled sufficient to form a sheet of adequate thickness on the front roller. After this initial homogenization the machine was halted, further material was added and the distance between the two rollers increased. The material was completely consumed in 3-4 additions. The sheet thickness was about 3-4 mm. At this point the sheet was removed and was placed in the mixer at 90° to the previous calandering direction.

The operation was repeated 2-3 times. The material was removed from the roller by simply halting the machine, cutting the sheet, removing it by hand and restarting the rollers.

The material was then pressed (50 kg/cm²) for 1 hour at 20°C and dried in an oven at 80°C for 12-15 hours. The MDF cement test piece weighed 18.5 g, its dimensions being 3 x 12 x 0.5 cm.

The hardened test piece was immersed in a saturated aqueous CO₂ solution (500 ml) maintained at 20°C, for 25 days.

On the third day the solution pH was 7.1. This value remained virtually unaltered during the entire test, up to the 25th day.

No solid separated from the aqueous solution, and the calcium ion concentration in the solution was 50 ppm.

### EXAMPLE 2

A second MDF cement test piece was prepared substantially by the procedure of Example 1. When hardened the test piece weighed 18.1 g, its dimensions being 2.9 x 12 x 0.6 cm.

This test piece was immersed in deionized water (500 ml) at 20°C in air.

The solution pH was 10.6 from the second day.

A white solid (1.5 g) separated from the aqueous solution after 25 days and on diffractometer analysis was found to be a mixture of calcium carbonate and aluminium hydroxide.

### EXAMPLE 3

The MDF cement test piece treated as described in Example 1 was immersed in deionized water (500 ml) and maintained at 20°C for 3 days in air.

The pH of the aqueous solution was 8.4.

No solid separated from the aqueous solution, and the calcium ion concentration was 26 ppm.

### EXAMPLE 4

Mechanical properties (flexural strength at three points) were determined for a series of test pieces prepared from a composition analogous to that of Example 1, of dimensions 16.0 x 3.8 x 0.3 cm.

The flexural breakage tests were carried out using an INSTRON mod. 4302 (load cell 10 KN, distance between supports 100 mm, test rate 1 mm/min).

The series of test pieces, cured, pressed and dried under the conditions described in the preceding examples, was divided into three fractions. The first, consisting of dry test pieces (never leached in water) showed a breaking load of 138 MPa, the second, immersed for 3 days in a saturated CO₂ solution, showed a breaking load of 130 MPa, while the third, immersed for 3 days in water without the CO₂ treatment, showed a breaking load of 113 MPa.

## Claims

1. A process for increasing the water resistance of hardened cementitious MDF materials, having a water content not more than 30 % by weight with respect to the hydraulic cement quantity, comprising a water-soluble or water-dispersible polymer, characterised by treating said cementitious material with carbonating agents in the presence of water.

2. A process as claimed in claim 1, characterised in that the carbonating agent is water-soluble bicarbonate or carbonate, or carbon dioxide in the presence of water.

3. A process as claimed in claim 1, characterised in that the carbonating agent is a saturated CO₂ solution.

4. A process as claimed in claims 1 to 3, characterised in that the hydraulic cement is chosen from Portland cement, aluminous cement and pozzolan cement.

5. A process as claimed in claims 1 to 3, characterised in that the hydraulic cement is aluminous cement.

6. A process as claimed in claims 1 to 5, characterised in that the water-soluble or water-dispersible polymer is chosen from:
- alkyl ethers and hydroxyalkyl cellulose
- acrylamide or polyacrylamide polymers; hydrolisable polymers or copolymers of vinylacetate
- polyvinylalcohol and its polymers and copolymers,
- polyalkylene oxide derivatives, and
- polyalkoxy derivatives of alcohols, preferably polyvinylalcohol.

7. A process as claimed in claims 1 to 6, characterised in that the cementitious compositions contain fibers in the form of continuous or cut threads or meshes with various mesh apertures, either random or orientated, and chosen from: polyethylene, polypropylene, polyamide, polyester, polyvinyl alcohol, cellulose, polyacrylonitrile, carbon, kevlar and nylon, their copolymers or their mixtures.

8. Cementitious compositions obtained by a process according to claims 1-7.

9. Use of an aqueous solution of a carbonating agent to increase the water resistance of a MDF cementitious material comprising a water-soluble or water-dispersible polymer.

## Patentansprüche

1. Verfahren zur Erhöhung der Wasserfestigkeit gehärteter zementartiger MDF-Materialien mit einem Wassergehalt von nicht mehr als 30 Gew.-%, bezogen auf die Menge hydraulischen Zements, enthaltend ein wasserlösliches oder in Wasser dispergierbares Polymer, dadurch **gekennzeichnet,** daß das zementartige Material mit Carbonisierungsmitteln in Gegenwart von Wasser behandelt wird.

2. Verfahren nach Anspruch 1, dadurch **gekennzeichnet,** daß das Carbonisierungsmittel wasserlösliches Bicarbonat oder Carbonat oder Kohlenstoffdioxid in Gegenwart von Wasser ist.

3. Verfahren nach Anspruch 1, dadurch **gekennzeichnet,** daß das Carbonisierungsmittel eine gesättigte CO₂-Lösung ist.

4. Verfahren nach den Ansprüchen 1 bis 3, dadurch **gekennzeichnet,** daß der hydraulische Zement ausgewählt ist aus Portland-Zement, Schmelzzement und Pozzolan-Zement.

5. Verfahren nach den Ansprüchen 1 bis 3, dadurch **gekennzeichnet,** daß der hydraulische Zement Schmelzzement ist.

6. Verfahren nach den Ansprüchen 1 bis 5, dadurch **gekennzeichnet,** daß das wasserlösliche oder in Wasser dispergierbare Polymer ausgewählt ist aus:
- Alkylethern und Hydroxyalkylcellulose
- Acrylamid- oder Polyacrylamidpolymeren; hydrolysierbaren Vinylacetatpolymeren oder -copolymeren
- Polyvinylalkohol und seinen Polymeren und Copolymeren
- Polyalkylenoxidderivaten und
- Polyalkoxyderivaten von Alkoholen, vorzugsweise Polyvinylalkohol.

7. Verfahren nach den Ansprüchen 1 bis 6, dadurch **gekennzeichnet,** daß die zementartige Zusammensetzung Fasern in Form durchgehender oder geschnittener Fäden oder Geflechte mit verschiedenen Maschenweiten, entweder zufällig oder orientiert, enthält, ausgewählt aus: Polyethylen, Polypropylen, Polyamid, Polyester, Polyvinylalkohol, Cellulose, Polyacrylnitril, Kohlenstoff, Kevlar und Nylon, ihren Copolymeren oder ihren Gemischen.

8. Zementartige Zusammensetzungen, die man durch ein Verfahren nach den Ansprüchen 1 bis 7 erhält.

9. Verwendung einer wäßrigen Lösung eines Carbonisierungsmittels, um die Wasserfestigkeit eines MDF-zementartigen Materials, das ein wasserlösliches oder wasserdispergierbares Polymer enthält, zu erhöhen.

## Revendications

1. Procédé pour augmenter la résistance à l'eau des matériaux de ciment exempt de macrodéfauts ayant une teneur en eau ne dépassant 30 % en poids par rapport à la quantité de ciment hydraulique, comprenant un polymère hydrosoluble ou dispersible dans l'eau, caractérisé par le traitement du matériau de ciment avec des agents de carbonation en présence d'eau.

2. Procédé selon la revendication 1, caractérisé en ce que l'agent de carbonation est un dioxyde de carbone ou un carbonate ou un bicarbonate hydrosoluble en présence d'eau.

3. Procédé selon la revendication 1, caractérisé en ce que l'agent de carbonation est une solution saturée de CO₂.

4. Procédé selon les revendications 1 à 3, caractérisé en ce que le ciment hydraulique est choisi à partir de ciment Portland, de ciment alumineux et de ciment de pozzolan.

5. Procédé selon les revendications 1 à 3, caractérisé en ce que le ciment hydraulique est du ciment alumineux.

6. Procédé selon les revendications 1 à 5, caractérisé en ce que le polymère hydrosoluble ou dispersible dans l'eau est choisi à partir de
- alkyléther et hydroxyalkylcellulose
- polymères acrylamide ou polyacrylamide ; polymères hydrolysables ou copolymères d'acétate de vinyle
- alcool polyvinylique et ses polymères et copolymères,
- dérivés d'oxyde polyalkylène, et
- dérivés polyalcoxy d'alcools, de préférence d'alcool polyvinylique.

7. Procédé selon les revendications 1 à 6, caractérisé en ce que les compositions de ciment contiennent des fibres sous forme de fils continus ou découpés ou de mailles avec différentes ouvertures de mailles aléatoires ou orientées et choisies à partir de polyéthylène, polypropylène, polyamide, polyester, alcool de polyvinyle, cellulose, polyacrylonitrile, carbone, kevlar et nylon, leurs copolymères ou leurs mélanges.

8. Compositions de ciment obtenues par un procédé selon les revendications 1-7.

9. Utilisation d'une solution aqueuse d'un agent de carbonation pour augmenter la résistance à l'eau d'un matériau de ciment exempt de macrodéfauts comprenant un polymère hydrosoluble ou dispersible dans l'eau.
